(19) Europäisches Patentamt

European Patent Office

Office européen des brevets

(11) **EP 3 607 196 B1**

(12) **EUROPEAN PATENT SPECIFICATION**

(45) Date of publication and mention
of the grant of the patent:
**20.11.2024 Bulletin 2024/47**

(21) Application number: **18781265.6**

(22) Date of filing: **27.03.2018**

(51) International Patent Classification (IPC):
$F02F\ 3/26^{(2006.01)}$    $F02B\ 23/06^{(2006.01)}$
$F02F\ 3/24^{(2006.01)}$    $F02F\ 3/28^{(2006.01)}$

(52) Cooperative Patent Classification (CPC):
**F02B 23/0693; F02B 23/0651; F02B 23/0669;
F02B 23/0672;** F02F 3/26; Y02T 10/12

(86) International application number:
**PCT/SE2018/050328**

(87) International publication number:
**WO 2018/186786 (11.10.2018 Gazette 2018/41)**

(54) **A PISTON FOR AN INTERNAL COMBUSTION ENGINE**

KOLBEN FÜR EINEN VERBRENNUNGSMOTOR

PISTON POUR UN MOTEUR À COMBUSTION INTERNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.04.2017   SE 1750412**

(43) Date of publication of application:
**12.02.2020   Bulletin 2020/07**

(73) Proprietor: **Scania CV AB
151 87 Södertälje (SE)**

(72) Inventors:
• **LEQUIEN, Guillaume
78 220 Viroflay (FR)**

• **CHARTIER, Clément
646 31 Gnesta (SE)**

(74) Representative: **Scania CV AB
Patents, GP 117kv
151 87 Södertälje (SE)**

(56) References cited:
WO-A1-2009/058055    WO-A1-2014/094796
WO-A1-2016/150539    DE-U1- 202016 106 470
JP-A- 2004 190 572    JP-A- 2007 211 644
US-A- 4 635 597    US-A- 5 215 052
US-A- 5 215 052    US-A1- 2005 252 483
US-A1- 2009 050 101    US-A1- 2009 095 251
US-A1- 2011 253 094    US-A1- 2011 253 094
US-A1- 2016 265 418

EP 3 607 196 B1

**Description**

TECHNICAL FIELD OF THE INVENTION

The present invention relates to a piston for an internal combustion engine according to the preamble of claim 1 and to an internal combustion engine comprising at least one cylinder with such a piston. It also relates to a motor vehicle comprising an internal combustion engine.

While the piston is primarily discussed with respect to diesel engines, it is to be understood that the piston may be used in any kind of internal combustion engine using direct injection of fuel, i.e. injection of fuel into a combustion chamber where the fuel is ignited to provide piston movement.

BACKGROUND AND PRIOR ART

Internal combustion engines such as diesel engines, also known as compression-ignition engines, and Otto engines, or sparkignition engines, are commonly used in different types of motor vehicles, such as trucks and buses, cars, vessels, etc. Internal combustion engines are also used in many industrial applications.

Internal combustion engines, hereinafter also referred to as engines, may be driven by a plurality of different types of fuel, such as diesel, petrol, ethanol, gaseous fuel, and biofuel. The engines have a number of cylinders in which a reciprocating piston is provided. In an upper end of the piston, a piston bowl is provided.

Together with an upper part of the cylinder and a cylinder head, the piston bowl forms a combustion chamber in which fuel is injected and combusted. The piston bowl is designed to contribute to mixing of air and fuel and to create a flow pattern influencing combustion and emission formation within the combustion chamber.

In a diesel engine, the fuel is normally injected as a fuel spray, or fuel jet, with a very high pressure subsequent to an intake stroke and a compression stroke of the piston. The fuel is ignited by the compression heat and combusted almost immediately following injection. Air and fuel must therefore be mixed in a very short time, and it is desirable to ensure that the mixing is efficient and that the fuel becomes well-distributed within the combustion chamber so as to achieve a complete combustion. In this type of engine, the burning rate of the fuel is controlled by the entrainment of the surrounding in-cylinder air into the fuel spray. Faster burning rates lead to higher efficiencies of the thermodynamic cycle, which in turn can translate into more fuel efficient engines. Piston bowl designs which can increase fuel-air mixing rates are therefore of particular interest.

Increasingly stringent emission regulations, for diesel engines relating primarily to soot and nitrogen oxide (NOx) emissions, make it necessary to aim at further improving the emission control of internal combustion engines. However, more efficient emission control often require more complex and energy demanding aftertreatment and combustion systems, which particularly in the case of the aftertreatment system may contribute to an increased fuel consumption. For example, a swirl motion may be created to form turbulence in the combustion chamber and efficiently mix fuel with air. The swirl motion is a large scale whirling motion around the axis of the cylinder, which is typically created during the intake stroke of the piston by e.g. helical intake ports. Together with a high fuel injection pressure, the swirl motion may improve the combustion conditions and thereby reduces emission levels.

SE533053 discloses a piston having a piston bowl with a central bottom portion sloping downward from a central point located on the central axis and a side wall comprising an annular upper side wall portion sloping downward and radially inward from an annular top surface, and an annular concave lower side wall portion defining a lowest level of the piston bowl, extending from the central bottom portion toward the upper side wall portion. In a transition between the concave lower side wall portion and the upper side wall portion, a knee is formed which projects toward the central axis. The knee provides improved conditions for mixing of air and fuel and thereby improved combustion emissions.

However, in order to further improve the combustion conditions and reduce emission levels, there is a need to further enhance the conditions for mixing of fuel and air within the combustion chamber.

US 2011/0253094 A1 discloses a piston comprising a bowl having an inner surface including at least one surface feature that forms at least one edge portion as a target for the fuel spray. The surface features are described to reduce soot and improve fuel-air mixing.

US 2005/252483 A1 discloses a piston comprising a piston recess provided with a plurality of radial cavities extending from the recess radially into the piston head for receiving fuel injected into the combustion chamber. US 2009/050101 A1 and US5215052A disclose other pistons.

SUMMARY OF THE INVENTION

It is a primary objective of the present invention to provide a piston for an internal combustion engine which has a piston bowl configured to improve the efficiency of combustion and to reduce emission levels. A second objective is to provide an internal combustion engine in which emission levels can be reduced and the fuel efficiency can be increased.

At least the first objective is achieved by means of the initially defined piston for an internal combustion engine, characterised in that if the vertical plane in which the section is taken is revolved around the central axis, each one of the profile portions is displaced in and out with respect to the central axis in dependence on an oscillating function, so that a distance from the central axis to the side wall varies with an angular displacement of the vertical plane. In other words, ripples are formed in the side wall of the piston bowl. The two profile portions, which may be mutually symmetric, thus have the same appearance regardless of where around the central axis the longitudinal section is taken, but are displaced with respect to the central axis depending on the angular displacement of the vertical plane. All parts of the side wall, i.e. the upper side wall portion, the knee and the concave lower side wall portion, are displaced with respect to the central axis as the vertical plane is revolved around the central axis. The displacement of the profile portions with respect to the central axis may be along a line perpendicular to the central axis, i.e. a radius of the piston bowl. The oscillating function is a smooth trigonometric function.

The piston according to the invention has the advantage that the level of turbulence close to the side wall of the piston bowl is locally increased. A large scale swirl motion created on an intake stroke of the piston is broken down into smaller turbulent eddies and local recirculation vortices. As fuel is injected into the piston bowl in the form of fuel jets, the flow pattern created close to the side wall is therefore expected to enhance the turbulent fuel-air mixing at leading ends of the fuel jets, thus producing a more rapid burning rate which positively affects the efficiency of the thermodynamic cycle. Accordingly, a reduction of the engine fuel consumption can be expected.

The piston bowl design may further contribute to increasing the turbulent intensity during the last part of the combustion cycle, and thereby enhances late-cycle oxidation of fuel and intermediate combustion products. This is beneficial for increasing the energy efficiency of the internal combustion engine in which the piston is provided.

The piston according to the invention can be used in existing internal combustion engines without heavy modifications. It is relatively easy to implement in existing engine designs and requires no additional hardware to function as desired.

The oscillating function is a periodic function. The piston bowl can thereby easily be adapted for a fuel injector with a nozzle designed to inject fuel into the combustion chamber with a symmetric fuel injection pattern, i.e. with orifices for injecting fuel being evenly distributed around the nozzle. By varying the periodicity of the function, the piston can be tailored for a particular number of fuel jets. The periodic function is a smooth function, so that a side wall without sharp corners is generated.

The oscillating function is a smooth trigonometric function. The trigonometric function may e.g. be in the form of a sinusoid or a combination of sinusoids, but also other trigonometric functions are possible. A smooth trigonometric function, such as a sinusoid, generates a piston bowl without sharp corners, which may otherwise trap fuel and result in incomplete combustion.

According to one embodiment, the oscillating function is such that at least eight ripples are formed in the side wall, preferably at least ten ripples. A sufficient number of recesses in the side wall for creating local turbulence are thereby provided. The number of ripples may be independent of the fuel injection pattern, but it may also be correlated. The number of ripples formed in the side wall can be optimized taking for example the fuel injection pattern, the level of swirl and the compression ratio into account.

According to another aspect of the present invention, at least the second objective is achieved by means of an internal combustion engine comprising at least one cylinder with the proposed piston. Advantages of such an internal combustion engine appear from the above description of the piston. Of course, the internal combustion engine may comprise a plurality of cylinders having the proposed piston. The internal combustion engine may be adapted for use within a motor vehicle or within a stationary machine such as a pump or an electrical generator.

According to one embodiment, the internal combustion engine further comprises a fuel injector configured to inject and direct fuel toward a number of target positions located on the side wall. The fuel injector may e.g. have nozzle with a number of orifices for fuel injection. Preferably, the fuel injector may be positioned on the central axis.

According to one embodiment, the target positions are angularly located on, below or above portions of the knee which are closest to the central axis. In this way, fuel is directed toward portions of the side wall that protrude toward the central axis. As the fuel jets, or rather ignited fuel jets in the form of flames, impact on the target positions, the fuel jets/flames are split both axially by means of the knee, but also laterally. Instead of obtaining a two dimensional splitting of fuel, a three dimensional splitting of fuel is achieved.

According to one embodiment, the number of target positions is a multiple of a number of ripples formed in the side wall. By correlating the number of target positions with the number of ripples formed in the side wall, for example such that the number of ripples and the number of target positions coincide, the mixing of fuel and air may in some applications be optimized. However, it is not necessary that the number of ripples coincide with the number of target positions. A correlation between the number of ripples and the number of target positions can be optimized taking for example the fuel injection pattern, the level of swirl and the compression ratio into account.

The invention also relates to a motor vehicle comprising the proposed internal combustion engine. The motor vehicle may be a heavy motor vehicle such as a truck or a bus, but it may also be e.g. a passenger car or another motor vehicle.

Further advantages as well as advantageous features of the present invention will appear from the following detailed description.

BRIEF DESCRIPTION OF THE DRAWINGS

Embodiments of the invention will in the following be described with reference to the appended drawings, in which:

Fig. 1a    schematically shows an axial section of a cylinder of an internal combustion engine including a piston according to an embodiment,
Fig. 1b    schematically shows a motor vehicle according to an embodiment,
Fig. 2     is a perspective view of the piston in fig. 1a,
Fig. 3     is an upper end view of the piston in fig. 2,
Fig. 4     shows a curve describing the shape of the piston bowl according to an embodiment, and
Fig. 5     schematically shows flow of fuel in a piston bowl according to an embodiment.

DETAILED DESCRIPTION OF EMBODIMENTS OF THE INVENTION

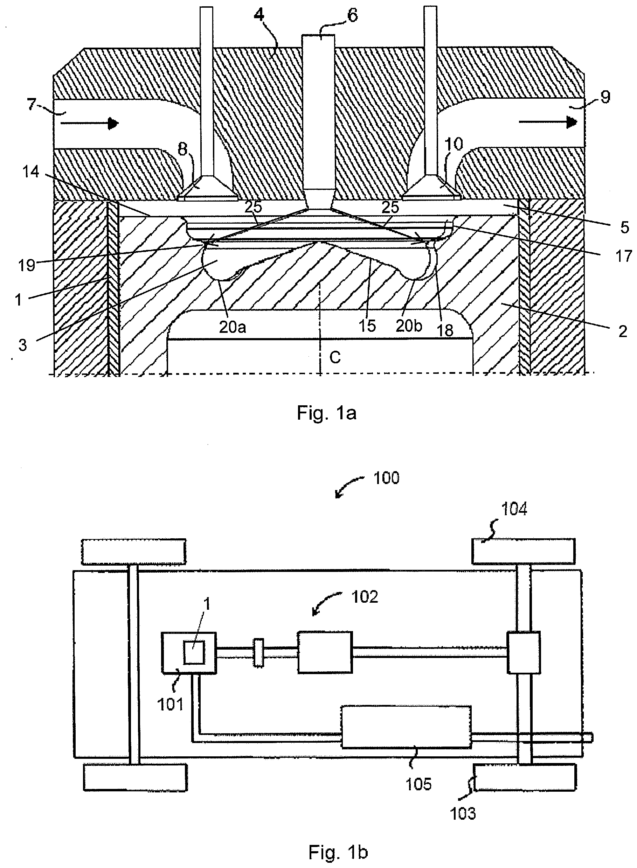

Fig. 1a shows a cylinder 1 of an internal combustion engine in the form of a diesel engine according to an embodiment of the invention. In the cylinder 1, a piston 2 configured to reciprocate within the cylinder along a common central axis C is provided. A piston bowl 3 is formed in the piston 2, which together with internal walls of the cylinder 1 and an internal surface of a cylinder head 4 creates a combustion chamber 5. A fuel injector 6 is positioned on the central axis C above the piston bowl 3. An intake port 7 is provided in the cylinder head 4 for supply of air into the combustion chamber 5 via an intake valve 8. Furthermore, an exhaust port 9 is provided in the cylinder head 4 for evacuation of exhaust gases via an exhaust valve 10.

A motor vehicle 100 according to an embodiment of the invention is schematically shown in fig. 1b. The motor vehicle 100 comprises an internal combustion engine 101 forming part of a powertrain 102 which drives driving wheels 103, 104. A plurality of cylinders 1, of which only one is schematically shown, is provided in the combustion engine. Each cylinder 1 is provided with a piston bowl according to an embodiment of the invention. The motor vehicle 100 further comprises an exhaust treatment system 105.

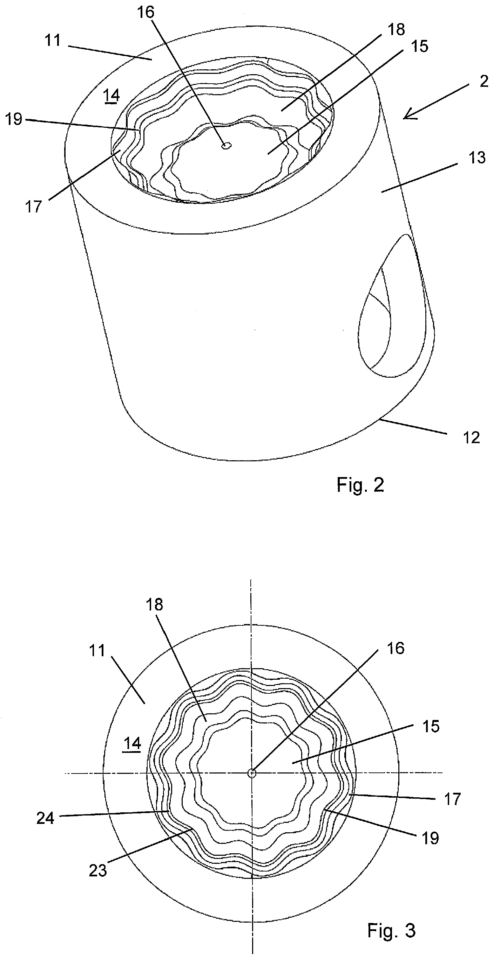

The piston 2 according to the embodiment shown in fig. 1a is shown in closer detail in figs. 2-3. The piston 2 has the basic shape of a right circular cylinder with an upper end 11 and a lower end 12, between which a central axis C and a peripheral envelope surface 13 extend. The upper end 11 comprises an annular top surface 14 defining an upper plane. The piston bowl 3 is recessed with respect to the upper plane defined by the top surface 14.

The piston bowl 3 comprises a central bottom portion 15 sloping downward from a central point located on the central axis C. The central bottom portion 15 is cone shaped with a rounded top 16, which top 16 is recessed with respect to the upper plane. The piston bowl 3 further comprises a side wall surrounding the central bottom portion 15. The side wall has a curved, slightly S-shaped upper side wall portion 17 that slopes downward and radially inward from the annular top surface 14. It further has a concave lower side wall portion 18 defining a lowest level of the piston bowl. The lower side wall portion 18 extends from the central bottom portion 15 toward the upper side wall portion 17. Between the lower side wall portion 18 and the upper side wall portion 17, a knee 19 projecting toward the central axis C is formed. As seen in a section taken in a vertical plane including the central axis C, such as shown in fig. 1a, the piston bowl 3 has a two dimensional profile comprising two profile portions 20a, 20b located on opposite sides of the central axis C.

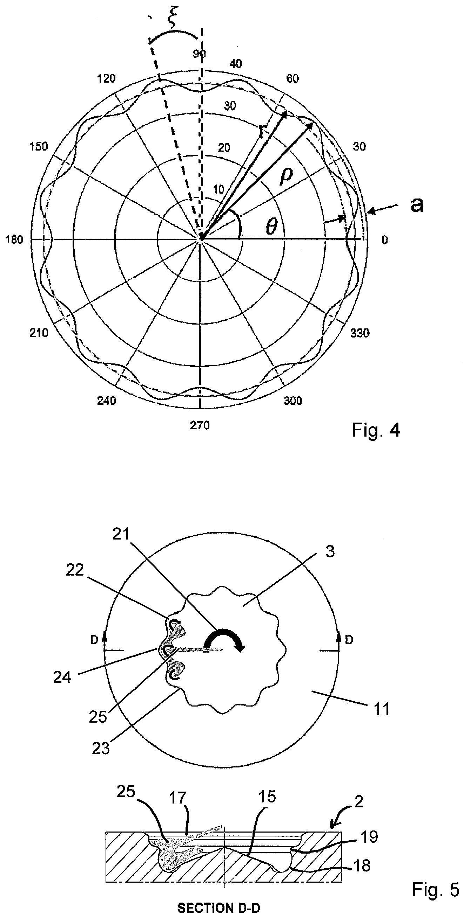

If the vertical plane in which the section is taken is revolved around the central axis C of the piston 2, each of the profile portions 20a, 20b is displaced in and out with respect to the central axis C in dependence on an oscillating function. In the shown embodiment, the oscillating function is in the form of a sinusoid, so that a distance from the central axis C to the side wall varies with an angular displacement $\theta$ of the vertical plane around the central axis C. However, other periodic or non-periodic oscillating functions are possible to use instead of a sinusoid. It is also possible to use e.g. a combination of sinusoids or other trigonometric functions. Fig. 4 shows a path that describes the appearance of a medial transverse section of the knee 19 of the piston bowl 3, wherein a radial distance $\rho$ (solid line) from the central axis C to the knee 19 varies between $r \pm 0.5a$, wherein r (dashed line) is an average radial distance r from the central axis C to the knee 19 and a is the amplitude of the variation. In the shown embodiment, the radial distance $\rho$ can, as a function of the angular displacement $\theta$, be described as:

$$\rho(\theta) = r + a \cdot \cos [n \cdot \theta + (a/r) \cdot \sin (n \cdot \theta + \xi) + \xi] \qquad (1)$$

wherein 2ξ is the angular period of the variation and wherein n is the number of peaks. It should be noted that this function can be used to describe the distance from the central axis C to any point on the side wall as a function of angular displacement, i.e. not only to the knee 19 but also to the lower side wall portion 18 and to the upper side wall portion 17. The amplitude a can be determined in a global optimization of the combustion system under the range of operating conditions of the internal combustion engine. For example, a volume of the piston bowl 3, a fuel injection pattern, a level of swirl and a compression ratio can be taken into account.

If one of the profile portions 20a, 20b discussed above is revolved around the central axis C, each point of the profile portion 20a, 20b will follow a path described by the equation (1). The side wall thereby has a wavy surface. This can also be described as ripples being formed in the side wall. In the embodiment shown in figs. 1-3, a total of ten ripples are formed. If the path shown in fig. 4 is used to design a piston bowl, a total of twelve ripples will be formed in the side wall. Also the central bottom portion may be formed with a wavy surface, although in the shown embodiment the central bottom portion 15 is cone shaped without ripples formed in the surface.

The fuel injector 6 is configured for injecting fuel into the cylinder 1 as a fuel jet 25, so that the fuel is mixed with air compressed in the cylinder 1 to form a fuel/air mixture. The fuel/air mixture is after an ignition delay ignited by compression heat generated in the cylinder 1. The ignited part of the fuel jet 25 forms a flame. The fuel can be injected with different injection pressures, from low to very high pressures. The fuel injector 6 includes a plurality of small injection orifices (not shown), formed in the lower end of a nozzle assembly of the fuel injector 6 for permitting the high pressure fuel to flow from a nozzle cavity of the fuel injector 6 into the combustion chamber 5 with high pressure to induce thorough mixing of the fuel with the hot compressed air within the combustion chamber 5. It should be understood that the fuel injector 6 may be any type of fuel injector capable of injecting high pressure fuel through a plurality of injector orifices into the combustion chamber 5. Also, the fuel injector need not necessarily be positioned on the central axis C.

The injection orifices of the fuel injector 6 are arranged so that the fuel jets 25 are injected toward target positions on, above or below the knee 19. The target positions are preferably also located on, below or above portions 23 of the knee 19 which are closest to the central axis C. It should be noted that the piston 2 is moving along the central axis C as the fuel jets 25 are injected, and therefore the exact target positions in the axial direction will vary. The target positions aimed for in the axial direction also depends on e.g. load and injection timing. As the ignited fuel jets 25, i.e. the flames, strikes the target positions, the flames are split on the knee 19 into an upper flow portion and a lower flow portion, but also on the portion 23 of the knee 19 so that mixing of fuel/air in the non-axial direction is enhanced.

Fig. 5 schematically shows the flow of fuel in the combustion chamber 5 after injection of fuel in an upper end view (top) and in a cross sectional view along the line D-D (bottom). In the embodiment shown in fig. 5, a large scale swirl has been created during the intake stroke of the piston 2, as depicted by the arrow 21. Upon injection of fuel in the form of a fuel jet 25 directed toward a target position, in this case located on a portion 24 of the knee 19 located furthest from the central axis C, the fuel jet 25 is split in the axial direction. At the same time, the rippled side wall interrupts the circulation of the swirl flow close to the side wall, creating instability in the local flow motion close to the side wall. Gradients are thereby created in the tangential velocity of the swirl flow, leading to the creation of local vortices as depicted by the arrows 22.

The invention is of course not in any way restricted to the embodiments described above. On the contrary, many possibilities to modifications thereof will be apparent to a person with ordinary skill in the art without departing from the basic idea of the invention such as defined in the appended claims.

**Claims**

1. A piston (2) for an internal combustion engine (101), wherein the piston (2) has an upper end (11) and a lower end (12) between which a central axis (C) and a peripheral envelope surface (13) extend, wherein the upper end (11) comprises an annular top surface (14) defining a plane and a piston bowl (3) configured to form part of a combustion chamber (5), wherein the piston bowl (3) is recessed with respect to the annular top surface (14) and comprises a central bottom portion (15) sloping downward from a central point located on the central axis (C) and a side wall surrounding the central bottom portion (15), the side wall comprising:

   - an upper side wall portion (17) sloping downward and radially inward from the annular top surface (14),
   - a concave lower side wall portion (18) defining a lowest level of the piston bowl (3), extending from the central bottom portion (15) toward the upper side wall portion (17),
   - a knee (19) formed in a transition between the upper side wall portion (17) and the concave lower side wall portion (18), projecting toward the central axis (C),
   wherein, as seen in a section taken in a vertical plane including the central axis (C), the piston bowl (3) has a two dimensional profile comprising two profile portions (20a, 20b) located on opposite sides of the central axis (C), *characterised in*

**that**, if the vertical plane in which the section is taken is revolved around the central axis (C), each one of the profile portions (20a, 20b) is displaced in and out with respect to the central axis (C) in dependence on an oscillating function, so that all parts of the side wall are displaced with respect to the central axis in dependence on the oscillating function, so that a distance from the central axis (C) to the side wall varies with an angular displacement ($\theta$) of the vertical plane around the central axis (C), and
wherein the oscillating function is a smooth trigonometric function.

2. The piston according to any one of the preceding claims, wherein the oscillating function is such that at least eight ripples are formed in the side wall, preferably at least ten ripples.

3. An internal combustion engine (101) comprising at least one cylinder (1) with a piston (2) according to any one of the preceding claims.

4. The internal combustion engine according to claim 3, further comprising a fuel injector (6) configured to inject and direct fuel toward a number of target positions located on the side wall.

5. The internal combustion engine according to claim 4, wherein the target positions are angularly located on, below or above portions (23) of the knee (19) which are closest to the central axis (C).

6. The internal combustion engine according to claim 4 or 5, wherein the number of target positions is a multiple of a number of ripples formed in the side wall.

7. A motor vehicle (100) comprising an internal combustion engine (101) according to claim 5 or 6.

8. The motor vehicle according to claim 7, wherein the motor vehicle is a heavy motor vehicle such as a truck or a bus.


**Patentansprüche**

1. Kolben (2) für einen Verbrennungsmotor (101), wobei der Kolben (2) ein oberes Ende (11) und ein unteres Ende (12) aufweist, zwischen denen sich eine Mittelachse (C) und eine periphere Mantelfläche (13) erstrecken, wobei das obere Ende (11) eine ringförmige obere Fläche (14), die eine Ebene definiert und eine Kolbenmulde (3) umfasst, die derart ausgebildet ist, dass sie einen Teil eines Brennraums (5) bildet, wobei die Kolbenmulde (3) relativ zu der ringförmigen oberen Fläche (14) ausgespart ist und einen zentralen Bodenabschnitt (15) umfasst, der von dem zentralen Punkt auf der Mittelachse (C) und einer Seitenwand, die den zentralen Bodenabschnitt (15) umgibt, aus nach unten abfällt, wobei die Seitenwand Folgendes umfasst:

- einen oberen Seitenwandabschnitt (17), der von der ringförmigen oberen Fläche (14) nach unten und radial nach innen abfällt,
- einen konkaven unteren Seitenwandabschnitt (18), der eine unterste Ebene der Kolbenmulde (3) definiert, der sich von dem zentralen unteren Abschnitt (15) zu dem oberen Seitenwandabschnitt (17) erstreckt,
- ein Kniestück (19), das in einem Übergang zwischen dem oberen Seitenwandabschnitt (17) und dem konkaven unteren Seitenwandabschnitt (18) ausgebildet ist und in Richtung der Mittelachse (C) vorsteht,
wobei, in einem Schnitt in einer die Mittelachse (C) umfassenden vertikalen Ebene betrachtet, die Kolbenmulde (3) ein zweidimensionales Profil aufweist, das zwei Profilabschnitte (20a, 20b) umfasst, die sich auf gegenüberliegenden Seiten der Mittelachse (C) befinden,
**dadurch gekennzeichnet,**
**dass**, wenn die vertikale Ebene, in der sich der Schnitt befindet, um die Mittelachse (C) gedreht wird, jeder der Profilabschnitte (20a, 20b) in Bezug auf die Mittelachse (C) abhängig von einer Schwingungsfunktion nach außen und innen verlagert wird, sodass alle Teile der Seitenwand in Bezug auf die Mittelachse abhängig von der Schwingungsfunktion verlagert werden, sodass ein Abstand von der Mittelachse (C) zu der Seitenwand mit einer Winkelverschiebung (8) der vertikalen Ebene um die Mittelachse (C) variiert und wobei die Schwingungsfunktion eine glatte trigonometrische Funktion ist.

2. Kolben nach einem der vorangehenden Ansprüche, wobei die Schwingungsfunktion wenigstens acht Wellen in der Seitenwand bildet, vorzugsweise wenigstens zehn Wellen.

3. Verbrennungsmotor (101) der wenigstens einen Zylinder (1) mit einem Kolben (2) nach einem der vorangehenden Ansprüche umfasst.

4.  Verbrennungsmotor nach Anspruch 3, ferner umfassend eine Kraftstoffeinspritzdüse (6), die dazu eingerichtet ist, Kraftstoff einzuspritzen und auf eine Anzahl von Zielpositionen zu richten, die sich an der Seitenwand befinden.

5.  Verbrennungsmotor nach Anspruch 4, wobei sich die Zielpositionen winklig auf, unter oder über Abschnitten (23) der Kniestücke (19) befinden, die sich am nächsten an der Mittelachse (C) befinden.

6.  Verbrennungsmotor nach Anspruch 4 oder 5, wobei die Anzahl der Zielpositionen einem Vielfachen der in der Seitenwand gebildeten Wellen entspricht.

7.  Kraftfahrzeug (100), das einen Verbrennungsmotor (101) nach Anspruch 5 oder 6 umfasst.

8.  Kraftfahrzeug nach Anspruch 7, wobei es sich bei dem Kraftfahrzeug um ein schweres Kraftfahrzeug wie einen Lastkraftwagen oder einen Bus handelt.

## Revendications

1.  Piston (2) pour un moteur à combustion interne (101), dans lequel le piston (2) a une extrémité supérieure (11) et une extrémité inférieure (12) entre lesquelles s'étendent un axe central (C) et une surface d'enveloppe périphérique (13), dans lequel l'extrémité supérieure (11) comprend une surface de sommet annulaire (14) définissant un plan et un bol de piston (3) configuré pour former une partie d'une chambre de combustion (5), dans lequel le bol de piston (3) est en retrait par rapport à la surface de sommet annulaire (14), et comprend une portion centrale de fond (15) inclinée vers le bas depuis le point central situé sur l'axe central (C) et une paroi latérale entourant la portion centrale de fond (15), la paroi latérale comprenant :

    - une portion de paroi latérale supérieure annulaire (17) inclinée vers le bas et radialement vers l'intérieur depuis la surface de sommet annulaire (14),
    - une portion de paroi latérale inférieure concave (18) définissant un niveau le plus bas du bol de piston (3), s'étendant depuis la portion centrale de fond (15) vers la portion de paroi latérale supérieure (17),
    - une articulation (19) formée dans une transition entre la portion de paroi latérale supérieure (17) et la portion de paroi latérale inférieure concave (18), faisant saillie vers l'axe central (C),
    dans lequel, comme vu dans une coupe prise dans un plan vertical comportant l'axe central (C), le bol de piston (3) a un profil bidimensionnel comprenant deux portions de profil (20a, 20b) situées sur des côtés opposés de l'axe central (C), *caractérisé en ce* **que**, si le plan vertical dans lequel la coupe est prise est tourné autour de l'axe central (C), chacune des portions de profil (20a, 20b) est déplacée vers l'intérieur et vers l'extérieur par rapport à l'axe central (C) selon une fonction oscillante, afin que toutes les parties de la paroi latérale soient déplacées par rapport à l'axe central selon la fonction oscillante, de sorte qu'une distance de l'axe central (C) à la paroi latérale varie avec un déplacement angulaire (0) du plan vertical autour de l'axe central (C), et dans lequel la fonction oscillante est une fonction trigonométrique lisse.

2.  Piston selon l'une quelconque des revendications précédentes, dans lequel la fonction oscillante est telle qu'au moins huit ondulations sont formées dans la paroi latérale, de préférence au moins dix ondulations.

3.  Moteur à combustion interne (101) comprenant au moins un cylindre (1) avec un piston (2) selon l'une quelconque des revendications précédentes.

4.  Moteur à combustion interne selon la revendication 3, comprenant en outre un injecteur de carburant (6) configuré pour injecter et diriger le carburant vers un certain nombre de positions cibles situées sur la paroi latérale.

5.  Moteur à combustion interne selon la revendication 4, dans lequel les positions cibles sont situées angulairement sur, au-dessous ou au-dessus de portions (23) de l'articulation (19) qui sont les plus proches de l'axe central (C).

6.  Moteur à combustion interne selon la revendication 4 ou 5, dans lequel le nombre de positions cibles est un multiple d'un nombre d'ondulations formées dans la paroi latérale.

7.  Véhicule à moteur (100) comprenant un moteur à combustion interne (101) selon l'une quelconque des revendications 5 ou 6.

8. Véhicule à moteur selon la revendication 7, dans lequel le véhicule à moteur est un véhicule lourd à moteur, tel qu'un camion ou un bus.

Fig. 1a

Fig. 1b

Fig. 2

Fig. 3

Fig. 4

SECTION D-D

Fig. 5

**EP 3 607 196 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- SE 533053
- US 20110253094 A1
- US 2005252483 A1
- US 2009050101 A1
- US 5215052 A